# EUROPÄISCHE PATENTSCHRIFT

(11) **EP 2 444 679 B1**
(45) Veröffentlichungstag und Bekanntmachung des Hinweises auf die Patenterteilung: **11.05.2016**
(21) Anmeldenummer: 11185656.3
(22) Anmeldetag: 18.10.2011
(51) Int. Cl.: F16B 41/00

(54) **Gehäuse mit einer Verliersicherung für eine Schraube**
Housing with a device preventing loss for a screw
Boîtier avec sécurité contre la perte pour une vis

(30) Priorität: 19.10.2010 DE 102010038267
(43) Veröffentlichungstag der Anmeldung: 25.04.2012
(73) Patentinhaber: Phoenix Contact GmbH & Co. KG, 32825 Blomberg (DE)
(72) Erfinder: Reimchen, Valeri, 32839 Steinheim/Sandebeck (DE)
(74) Vertreter: Michalski Hüttermann & Partner Patentanwälte mbB

(56) Entgegenhaltungen:
- DE-U1- 9 316 108
- DE-U1- 9 416 583
- US-A- 5 824 253
- US-A1- 2004 022 600

## Beschreibung

Die Erfindung betrifft ein Gehäuse mit einer Verliersicherung, einem Gehäusedeckel und einer Schraube, mit einem Schacht zur Aufnahme der Schraube und einem in dem Schacht angeordneten Haltemittel.
Verliersicherungen haben in verschiedenen Anwendungsgebieten, wie in der industriellen verbindungstechnik, eine große Bedeutung und dienen beispielsweise zur beweglichen aber verliersicheren Aufnahme einer Schraube an einem Montageteil. Während im Stand der Technik Schrauben vielfach erst bei der Endmontage eines Montageteils, wie einem Gehäusedeckel, eingesetzt werden, wird andererseits vielfach verlangt, dass dieses Montageteil bereits mit den notwendigen Schrauben zu einer Montageeinheit kombiniert zur Endmontage angeliefert wird, so dass die Endmontage mit einem vergleichsweise viel geringeren Zeitaufwand und gegebenenfalls auch automatisiert zu bewerkstelligen ist.

Aus dem Stand der Technik sind dazu verschiedene Verliersicherungen für Schrauben bekannt, die oftmals drei feste oder teilelastische Nocken aufweisen, welche den gewindefreien Bereich oder einen Freistich der Schraube als Hinterschnitt nutzen, um die Verliersicherung auszubilden.
Aus der US 2004/022600 A1 ist eine Verliersicherung für eine Schraube bekannt, die einen Schacht zur Aufnahme der Schraube und ein in dem Schacht angeordnetes Haltemittel aufweist.
Nachteilig bei derartigen Verliersicherungen ist jedoch, dass beim axialen Einschieben der Schraube in die verliersicherung die Nocken zum Teil abgeschert werden, so dass in der Folge beim wiederholten axialen Verschieben der Schraube die Nocken keine ausreichende Verliersicherung mehr bereitstellen. Weiterhin sind derartige Verliersicherungen für Schrauben mit durchgehendem Gewinde nur bedingt oder sogar gänzlich ungeeignet.

Der Erfindung liegt die Aufgabe zu Grunde, eine Verliersicherung für eine Schraube bereitzustellen, die in besonders einfacher und zuverlässiger Weise die Schraube gegen Verlieren sichert.
Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Demnach wird diese Aufgabe gelöst durch ein Gehäuse mit einer Verliersicherung, einem Gehäusedeckel und einer Schraube, wobei der Gehäusedeckel mit einer durch die Verliersicherung hindurchgeführten Schraube an dem Gehäuse befestigbar ist,
mit einem Schacht zur Aufnahme der Schraube und einem in dem Schacht angeordneten Haltemittel, wobei das Haltemittel im eingeführten Zustand der Schraube an einem Tangentialpunkt der Außenumfangsfläche der Schraube anliegt, das Haltemittel an der Innenumfangsfläche des Schachtes angeordnet ist und das Haltemittel sich von der Innenumfangsfläche des Schachtes im Wesentlichen linear derart in den freien Bereich des Schachtes hinein erstreckt, dass an dem Tangentialpunkt der Winkel zwischen der Erstreckungsrichtung des Haltemittels und zwischen der Außenumfangsfläche der Schraube < 90 Grad ist.
Erfindungsgemäß wird damit eine Verliersicherung für eine Schraube angegeben, mit der in besonders einfacher und sicherer Weise die Schraube in dem Schacht gegen Verlieren gesichert ist. Dadurch, dass entgegen den aus dem Stand der Technik bekannten Vorrichtungen das Haltemittel nicht senkrecht, sondern in einem Winkel < 90 Grad - also "schräg" - an der Außenumfangsfläche der Schraube anliegt, wird zum einen durch das Haltemittel Reibung auf der Außenumfangsfläche der Schraube erzeugt, so dass die Schraube gegen Verlieren in dem Schacht gesichert ist, und zum anderen erreicht, dass eine Abscherung des Haltemittels beim axialen Verschieben der Schraube in dem Schacht dadurch verhindert wird, dass das Haltemittel aufgrund der "schrägen" Anordnung an der Außenumfangsfläche der Schraube sich beispielsweise federnd von der Außenumfangsfläche der Schraube weg bewegen kann. Dadurch wird es auch ermöglicht, dass Maßabweichungen der Schraube durch die Federwirkung des Haltemittels abgefangen werden können. Mit anderen Worten wird also durch die erfindungsgemäße Verliersicherung ermöglicht, dass zum einen die Schraube besonders einfach axial in dem Schacht verschiebbar ist, ohne dass dadurch die Qualität der Verliersicherung beeinträchtigt wird, und zum anderen die Schraube durch das an der Außenumfangsfläche der Schraube anliegende Haltemittel sicher und verlässlich in dem Schacht gegen Verlieren gesichert wird.

Die erfindungsgemäße Verliersicherung kann mit einer beliebigen aus dem Stand der Technik bekannten Schraube verwendet werden. Vorzugsweise weist die Schraube einen Schaft auf, wobei an dem Schaft der Schraube ein Gewinde vorgesehen sein kann, so dass in diesem Fall die Außenumfangsfläche der Schraube beispielsweise durch den Schaft und/oder die Schraube ausgebildet ist. Vorzugswiese liegt das Haltemittel bei einer derartigen Ausgestaltung im eingeführten Zustand Schraube an dem Tangentialpunkt der Außenumfangsfläche des Schaftes und/oder des Gewindes der Schraube an. Ganz besonders bevorzugt liegt das Haltemittel im eingeführten Zustand der Schraube an einem Tangentialbereich der Außenumfangsfläche der Schraube an, also nicht nur punktuell im Tangentialpunkt, sondern flächig an dem Tangentialbereich. Weiterhin ist bevorzugt, dass sich das Haltemittel linear in den Schacht hinein erstreckt.

Der Schacht kann beispielsweise zylinder- oder rechteckförmig ausgestaltet sein, wobei der Schacht und/oder das Haltemittel vorzugsweise aus einem Kunststoff ausgeführt sind. Dabei liegt ganz besonders bevorzugt das Haltemittel im eingeführten Zustand der Schraube unmittelbar an der Außenumfangsfläche der Schraube an. Ganz besonders bevorzugt ist das Haltemittel an den Schacht angespritzt. Gemäß der Erfindung ist also vorgesehen, dass sich das Haltemittel vorzugsweise nicht senkrecht von der Innenumfangsfläche des Schachtes zum Mittelpunkt des Schachtes hin erstreckt, wie aus dem Stand der Technik bekannt, sondern von der Innenumfangsfläche des Schachtes "schräg" in den Schacht derart hinein erstreckt, dass das Haltemittel im eingeführten Zustand der Schraube an der Außenumfangsfläche der Schraube anliegt. Das Haltemittel erstreckt sich dabei vorzugsweise in einem Winkel < 90 Grad zwischen der durch den Berührpunkt des Haltemittels mit der Innenumfangsfläche des Schachtes verlaufenden Tangente der Innenumfangsfläche und zwischen dem Haltemittel in den Schacht hinein.

Nach einer besonders bevorzugten Ausführungsform der Erfindung erstreckt sich das Haltemittel ferner in Steckrichtung der Schraube, wobei im eingeführten Zustand der Schraube das Haltemittel an einer Tangentiallinie der Außenumfangsfläche der Schraube anliegt, der Tangentialpunkt auf der Tangentiallinie liegt, und an der Tangentiallinie der Winkel zwischen der Erstreckungsrichtung des Haltemittels und zwischen der Außenumfangsfläche der Schraube < 90 Grad ist. Gemäß dieser Ausführungsform der Erfindung ist also bevorzugt, dass sich das Haltemittel nicht nur von der Außenumfangsfläche des Schachtes "schräg" in den freien Bereich des Schachtes hin zum Mittelpunkt des Schachtes erstreckt, sondern das Haltemittel sich auch in Steckrichtung der Schraube erstreckt, beispielsweise eine quaderartige Form aufweist. Dadurch, dass das Haltemittel nicht nur an dem Tangentialpunkt der Außenumfangsfläche der Schraube an der Schraube anliegt, sondern entlang der Tangentiallinie, vorzugsweise entlang der gesamten Länge des sich in Steckrichtung der Schraube erstreckenden Haltemittels anliegt, wird eine wesentlich größere Reibung erzeugt, die in einem verbesserten Schutz gegen Verlieren der Schraube resultiert.

Erfindungsgemäß weist das Haltemittel eine erste sich in Steckrichtung der Schraube erstreckende Fase auf und die erste Fase ist an dem Haltemittel derart angeordnet, dass die erste Fase im eingeführten Zustand der Schraube an der den Tangentialpunkt aufweisenden Außenumfangsfläche im Wesentlichen parallel anliegt. Ferner ist bevorzugt, dass die erste Fase im eingeführten Zustand der Schraube an der den Tangentialpunkt aufweisenden Außenumfangsfläche mit ihrer Fasenfläche parallel anliegt. Weiterhin weist die erste Fase einen Radius auf, wobei der Radius der ersten Fase dem Radius der Schraube im Wesentlichen entspricht. Durch eine derartige Ausgestaltung kann in vorteilhafter Weise erreicht werden, dass das Haltemittel bzw. die erste Fase des Haltemittels nicht nur punktuell, sondern flächig an der Schraube anliegt, so dass die Reibung zwischen dem Haltemittel und der Schraube erhöht ist, was zu einem verbesserten Schutz gegen Verlieren der Schraube führt.
Nach einer weiteren vorteilhaften Ausgestaltung der Erfindung weist das Haltemittel eine zweite sich senkrecht zur Steckrichtung der Schraube erstreckende Fase auf, wodurch ein Einführen der Schraube in den Schacht erleichtert wird. Durch eine derartige Ausgestaltung wird das Einführen der Schraube in den Schacht dadurch erleichtert, dass durch die zweite sich senkrecht zur Steckrichtung der Schraube erstreckenden Fase das Haltemittel beim Einführen der Schraube von dem freien Bereich des Schachtes hin zur Innenumfangsfläche des Schachtes gedrückt wird, so dass die Schraube in dem Schacht axial verschiebbar ist.

Grundsätzlich kann der Winkel zwischen der Erstreckungsrichtung des Haltemittels und zwischen der Außenumfangsfläche der Schraube beliebig < 90 Grad ausgestaltet sein. Gemäß einer besonders bevorzugten Ausführungsform der Erfindung ist jedoch vorgesehen, dass der Winkel ≤ 80 Grad, vorzugsweise ≤ 70 Grad und ganz besonders bevorzugt ≤ 60 Grad ist. Weiterhin ist bevorzugt, dass der Winkel ≤ 50 Grad oder ≤ 45 Grad ist. Ganz besonders ist bevorzugt, dass der Winkel im nicht eingeführten Zustand der Schraube größer als im eingeführten Zustand der Schraube ist, vorzugsweise 5 Grad, 10 Grad oder 15 Grad größer ist. Eine letztgenannte Ausführungsform kann dadurch erreicht werden, dass das Haltemittel bei nicht eingeführter Schraube näher zum Mittelpunkt des Schachtes zeigt als im eingeführten Zustand der Schraube, wobei beispielsweise durch Vorsehen der zweiten Fase beim Einführen der Schraube das Haltemittel vom Mittelpunkt nach außen hin zur Innenumfangsfläche des Schachtes gedrückt wird.

Nach einer weiteren bevorzugten Ausführungsform der Erfindung sind n-Haltemittel vorgesehen, wobei n > 2, n eine natürliche Zahl ist und die Haltemittel im Abstand von im Wesentlichen 360/n Grad versetzt an dem Schacht angeordnet sind. Ganz besonders bevorzugt sind drei Haltemittel in dem Schacht vorgesehen, wobei die drei Haltemittel im Abstand von im Wesentlichen 120 Grad versetzt an dem Schacht angeordnet sind. Weiterhin ist bevorzugt, dass der Schacht und das Haltemittel einstückig ausgeführt sind.
Grundsätzlich kann das Haltemittel beliebig ausgestaltet sein. Gemäß einer weiteren besonders bevorzugten Ausführungsform der Erfindung ist jedoch vorgesehen, dass das Haltemittel rippenartig, stegartig und/oder quaderartig ausgestaltet ist. Weiterhin ist bevorzugt, dass das Haltemittel federnd ausgestaltet ist. Somit kann in einer besonders bevorzugten Ausführungsform der Erfindung das Haltemittel beispielsweise als federnde Rippe an dem Schacht angespritzt sein.

Nachfolgend wird die Erfindung unter Bezugnahme auf die anliegende Zeichnung anhand einer bevorzugten Ausführungsform näher erläutert.
Es zeigen
- Fig. 1: eine erfindungsgemäße Verliersicherung gemäß einem bevorzugten Ausführungsbeispiel der Erfindung in einer Draufsicht,
- Fig. 2: die erfindungsgemäße Verliersicherung gemäß dem bevorzugten Ausführungsbeispiel der Erfindung in einer perspektivischen Ansicht,
- Fig. 3: die erfindungsgemäße Verliersicherung mit einer Schraube gemäß dem bevorzugten Ausführungsbeispiel der Erfindung in einer perspektivischen Ansicht,
- Fig. 4: ein erfindungsgemäßes Gehäuse mit der Verliersicherung gemäß einem bevorzugten Ausführungsbeispiel der Erfindung in einer perspektivischen Ansicht, und
- Fig. 5: das erfindungsgemäße Gehäuse mit der Verliersicherung gemäß dem bevorzugten Ausführungsbeispiel der Erfindung in einer perspektivischen Rückansicht.

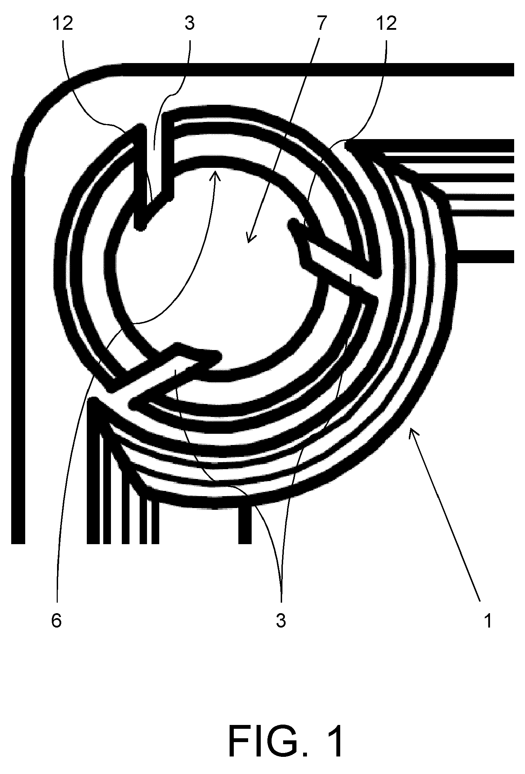

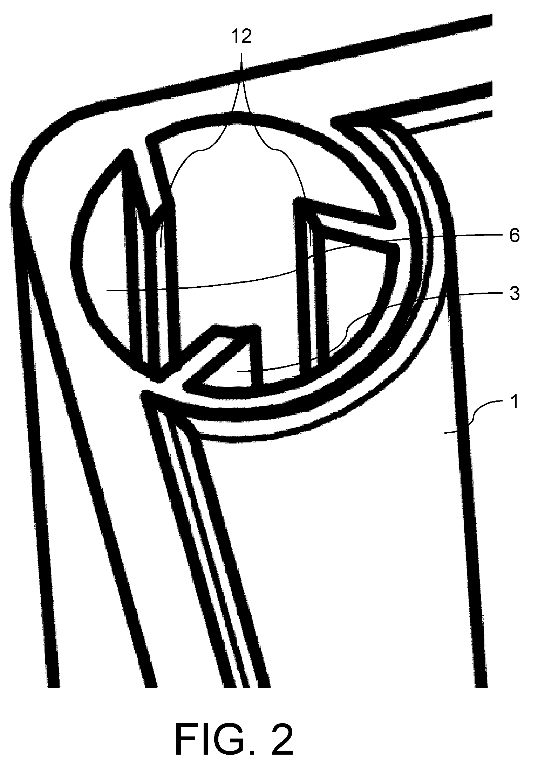

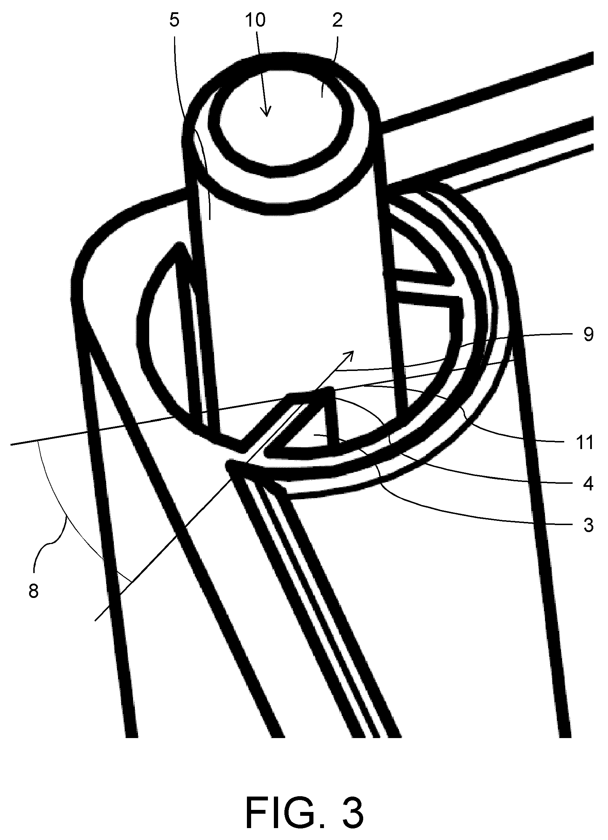

Die Figuren 1 bis 3 zeigen eine erfindungsgemäße Verliersicherung gemäß einem bevorzugten Ausführungsbeispiel der Erfindung. Die Verliersicherung weist einen Schacht 1 auf, welcher, wie aus Fig. 2 und Fig. 3 ersichtlich, einen im Wesentlichen kreisrunden Außendurchmesser aufweist. Der Schacht 1 ist vorliegend aus einem Kunststoff ausgeführt und zur Aufnahme einer Schraube 2, wie aus Fig. 3 ersichtlich, ausgestaltet.
Um die Schraube 2 in dem Schacht 1 verliersicher vorzusehen, sind vorliegend drei Haltemittel 3 vorgesehen, welche einstückig mit dem Schacht 1 ausgestaltet sind. Dabei sind die Haltemittel 3 derart ausgestaltet, dass im eingeführten Zustand der Schraube 2 in den Schacht 1 ein jeweiliges Haltemittel 3 an einem jeweiligen Tangentialpunkt 4 der Außenumfangsfläche 5 der Schraube 2 anliegt.

Das an der Innenumfangsfläche 6 des Schachtes 1 angeordnete Haltemittel 3 ist derart ausgestaltet, dass das Haltemittel 3 sich von der Innenumfangsfläche 6 des Schachtes 1 linear in den freien Bereich 7 des Schachtes 1 hinein erstreckt, so dass an dem Tangentialpunkt 4 der Winkel 8, wie aus Fig. 3 ersichtlich, zwischen der Erstreckungsrichtung 9 des Haltemittels 3 und zwischen der Außenumfangsfläche 5 der Schraube 1 in dem Tangentialpunkt 4, also der Tangente 11, < 90 Grad, vorliegend 45 Grad ist.

Das Haltemittel 3 erstreckt sich ferner in Steckrichtung 10 der Schraube 2 und ist vorliegend rippenartig als Quader ausgestaltet. Dabei weist das Haltemittel 3 eine erste sich in Steckrichtung 10 der Schraube 2 erstreckende Fase 12 auf, wobei die erste Fase 12, wie aus Fig. 3 ersichtlich, bzw. die Fasenfläche der ersten Fase 12, im eingeführten Zustand der Schraube 2 an der den Tangentialpunkt 4 aufweisenden Außenumfangsfläche 5 der Schraube 2 im Wesentlichen parallel anliegt bzw. die erste Fase 12 im Wesentlichen eine Krümmung derart aufweist, welche dem Radius der Schraube 2 entspricht.

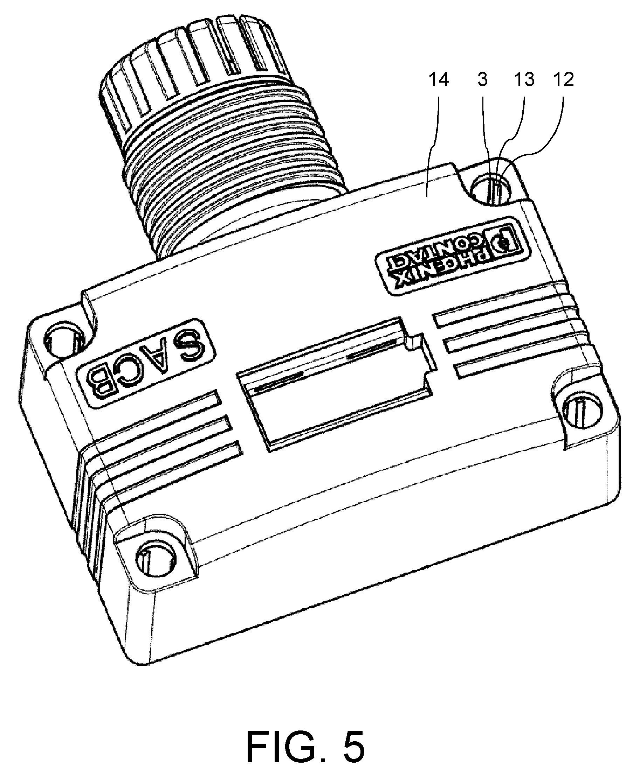

Weiterhin weist das Haltemittel 3 eine zweite Fase 13 auf, wie aus Fig. 5 ersichtlich. Die zweite Fase 13 erstreckt sich senkrecht zur Steckrichtung 10 der Schraube 2, so dass die Fasenfläche der zweiten Fase 13 hin zur Steckrichtung 10 der Schraube 2 geneigt ist. Durch diese zweite Fase 13 wird ein Einführen der Schraube 2 in den Schacht 1 erleichtert, da durch die zweite Fase 13 die federnd ausgestalteten Haltemittel 3 sich hin zum Rand des Schachtes 1 verbiegen, die Schraube 2 in dem Schacht 1 axial verschiebbar ist, und aufgrund der Federung die Haltemittel 3 an der Schraube 2 Reibung derart erzeugen, dass die Schraube 2 in dem Schacht 1 verliersicher gehalten wird.

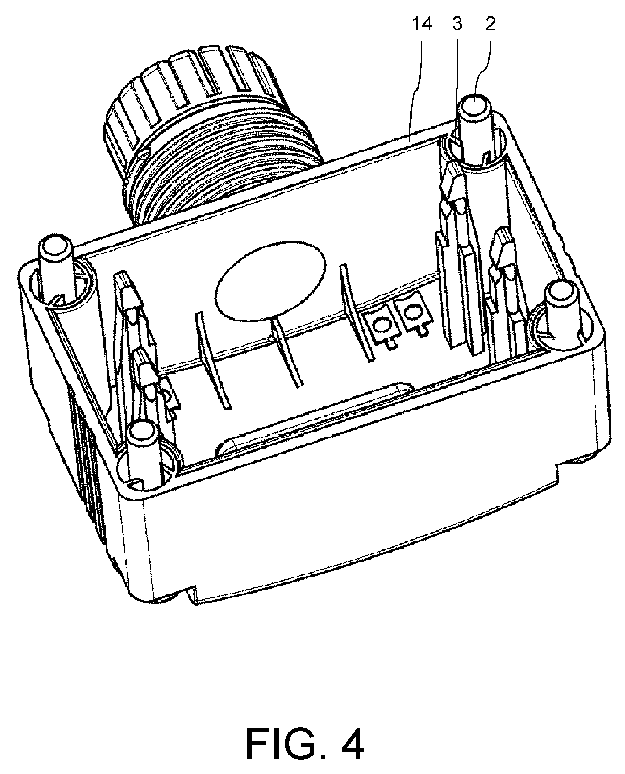

Aus Fig. 4 ist ein Gehäuse 14 mit vier an den Ecken des Gehäuses 14 angeordneten Verliersicherungen gezeigt, wobei ein nicht gezeigter Gehäusedeckel durch die an dem Gehäuse 14 verliersicher gehaltenen Schrauben 2 befestigbar ist. Fig. 5 zeigt das Gehäuse 14 in einer Rückansicht, so dass die zweite Fase 13 ersichtlich wird.

### Bezugszeichenliste

- Schacht: 1
- Schraube: 2
- Haltemittel: 3
- Tangentialpunkt: 4
- Außenumfangsfläche: 5
- Innenumfangsfläche: 6
- Freier Bereich: 7
- Winkel: 8
- Erstreckungsrichtung: 9
- Steckrichtung: 10
- Tangente: 11
- Erste Fase: 12
- Zweite Fase: 13
- Gehäuse: 14

## Patentansprüche

1. Gehäuse (14) mit einer Verliersicherung, einem Gehäusedeckel und einer Schraube (2), wobei
der Gehäusedeckel mit der durch die Verliersicherung hindurchgeführten Schraube (2) an dem Gehäuse (14) befestigbar ist,
die Verliersicherung einen Schacht (1) zur Aufnahme der Schraube (2) und ein in dem Schacht (1) angeordnetes Haltemittel (3) aufweist,
das Haltemittel (3) im eingeführten zustand der Schraube (2) an einem Tangentialpunkt (4) der Außenumfangsfläche (5) der Schraube (2) anliegt,
das Haltemittel (3) an der Innenumfangsfläche (6) des Schachtes (1) angeordnet ist,
das Haltemittel (3) sich von der Innenumfangsfläche (6) des Schachtes (1) im Wesentlichen linear derart in den freien Bereich (7) des Schachtes (1) hinein erstreckt, dass an dem Tangentialpunkt (4) der Winkel (8) zwischen der Erstreckungsrichtung (9) des Haltemittels (3) und zwischen der Außenumfangsfläche (5) des Schachtes (1) < 90 Grad ist,
das Haltemittel (3) eine erste sich in Steckrichtung der Schraube (2) erstreckende Fase (12) aufweist,
die erste Fase (12) an dem Haltemittel (3) derart angeordnet ist, dass die erste Fase (12) im eingeführten Zustand der Schraube (2) an der den Tangentialpunkt (4) aufweisenden Außenumfangsfläche (5) der Schraube (2) im wesentlichen parallel anliegt, und
die erste Fase (12) einen Radius aufweist und der Radius der ersten Fase (12) dem Radius der Schraube (2) im Wesentlichen entspricht.

2. Gehäuse nach Anspruch 1, wobei das Haltemittel (3) sich ferner in Steckrichtung (10) der Schraube (2) erstreckt, im eingeführten zustand der Schraube (2) das Haltemittel (3) an einer Tangentiallinie der Außenumfangsfläche (5) der Schraube (2) anliegt, der Tangentialpunkt (4) auf der Tangentiallinie liegt, und an der Tangentiallinie der Winkel (8) zwischen der Erstreckungsrichtung (9) des Haltemittels (3) und zwischen der Außenumfangsfläche (5) des Schachtes (1) < 90 Grad ist.

3. Gehäuse nach einem der vorhergehenden Ansprüche, wobei das Haltemittel (3) eine zweite sich senkrecht zur Steckrichtung (10) der Schraube (2) erstreckende Fase (13) aufweist.

4. Gehäuse nach einem der vorhergehenden Ansprüche, wobei der Winkel (8) ≤ 80 Grad, vorzugsweise ≤ 70 Grad und ganz besonders bevorzugt ≤ 60 Grad ist.

5. Gehäuse nach einem der vorhergehenden Ansprüche, mit n Haltemitteln (3) und n > 2, wobei die Haltemittel (3) im Abstand von im Wesentlichen 360/n Grad versetzt an dem Schacht (1) angeordnet sind.

6. Gehäuse nach einem der vorhergehenden Ansprüche, wobei das Haltemittel (3) rippenartig, stegartig und/oder quaderartig ausgestaltet ist.

7. Gehäuse nach einem der vorhergehenden Ansprüche, wobei das Haltemittel (3) federnd ausgestaltet ist.

## Claims

1. A housing (14) with a captive securing means, a housing cover and a screw (2), whereby
it is possible to fasten the housing cover to the housing (14) by way of the screw (2) passed through the captive securing means,
the captive securing means having a shaft (1) for holding the screw (2) and having a retaining means (3) arranged in the shaft (1),
the retaining means (3) resting, in the inserted state of the screw (2), at a tangential point (4) on the outer circumferential surface (5) of the screw (2),
the retaining means (3) being arranged on the inner circumferential surface (6) of the shaft (1),
the retaining means (3) extending from the inner circumferential surface (6) of the shaft (1) in a substantially linear manner into the free region (7) of the shaft (1) such that at the tangential point (4) the angle (8) between the direction of extent (9) of the retaining means (3) and the outer circumferential surface (5) of the screw (2) is < 90 degrees,
the retaining means (3) having a first bevel (12) that extends in the plug-in direction of the screw (2),
the first bevel (12) being arranged on the retaining means (3) such that the first bevel (12), in the inserted state of the screw (2) rests in a substantially parallel manner on the outer circumferential surface (5), which has the tangential point (4), of the screw (2), and
the first bevel (12) comprising a radius and the radius of the first bevel (12) substantially corresponding to the radius of the screw (2).

2. The captive securing means as claimed in claim 1, the retaining means (3) further extending in the plug-in direction (10) of the screw (2), the retaining means (3) resting, in the inserted state of the screw (2), on a tangential line on the outer circumferential surface (5) of the screw (2), the tangential point (4) being located on the tangential line, and on the tangential line the angle (8) between the direction of extent (9) of the retaining means (3) and the outer circumferential surface (5) of the screw (2) being < 90 degrees.

3. The captive securing means as claimed in one of the preceding claims, the retaining means (3) having a second bevel (13) which extends perpendicularly to the plug-in direction (10) of the screw (2).

4. The captive securing means as claimed in one of the preceding claims, the angle (8) being ≤ 80 degrees, preferably ≤ 70 degrees and very particularly preferably ≤ 60 degrees.

5. The captive securing means as claimed in one of the preceding claims, having n retaining means (3) where n > 2, the retaining means (3) being arranged on the shaft (1) in an offset manner at a spacing of essentially 360/n degrees.

6. The captive securing means as claimed in one of the preceding claims, the retaining means (3) being configured in a rib-like, web-like and/or cuboidal manner.

7. The captive securing means as claimed in one of the preceding claims, the retaining means (3) being configured in a resilient manner.

## Revendications

1. Boîtier (14) avec une sécurité contre la perte, un couvercle de boîtier et une vis (2), où
le couvercle de boîtier peut être fixé sur le boîtier (14) par une vis (2) traversant la sécurité contre la perte,
la sécurité contre la perte présente un compartiment (1) pour l'admission de la vis (2) et un système de maintien (3) disposé dans le compartiment (1),
le système de maintien (3) à l'état enfoncé de la vis (2) est plaqué au niveau d'un point tangentiel (4) sur la surface circonférentielle externe (5) de la vis (2),
le système de maintien (3) est disposé sur la surface circonférentielle interne (6) du compartiment (1),
le système de maintien (3) s'étend de manière substantiellement linéaire à partir de la surface circonférentielle interne (6) du compartiment (1) à l'intérieur de l'espace libre (7) du compartiment (1) de sorte que l'angle (8) entre la direction d'extension (9) du système de maintien (3) et entre la surface circonférentielle externe (5) du compartiment (1) est < 90 degrés au point tangentiel (4),
le système de maintien (3) présente un premier chanfrein (12) s'étendant dans la direction d'extension de la vis (2),
le premier chanfrein (12) est disposé sur le système de maintien (3) de telle façon que le premier chanfrein (12) à l'état enfoncé de la vis (2) se plaque substantiellement de manière parallèle sur la surface circonférentielle externe (5) de la vis (2) présentant le point tangentiel (4), et
le premier chanfrein (12) présente un rayon et le rayon du premier chanfrein (12) correspond substantiellement au rayon de la vis (2).

2. Boîtier selon la revendication 1, où le système de maintien (3) s'étend plus loin dans la direction d'extension (10) de la vis (2), le système de maintien (3) est plaqué sur une ligne tangentielle de la surface circonférentielle externe (5) de la vis (2) dans l'état enfoncé de la vis (2), le point tangentiel (4) se situe sur la ligne tangentielle, et sur la ligne tangentielle, l'angle (8) entre la direction d'extension (9) du système de maintien (3) et entre la surface circonférentielle externe (5) du compartiment est < 90 degrés.

3. Boîtier selon l'une des revendications précédentes, où le système de maintien (3) présente un deuxième chanfrein (13) s'étendant verticalement par rapport à la direction d'extension (10) de la vis (2).

4. Boîtier selon l'une des revendications précédentes, où l'angle (8) est ≤ 80 degrés, de préférence ≤ 70 degrés et de manière tout particulièrement préférée ≤ 60 degrés.

5. Boîtier selon l'une des revendications précédentes, avec n systèmes de maintien (3) et n > 2, où les systèmes de maintien (3) sont disposés décalés substantiellement de 360/n grades sur le compartiment (1).

6. Boîtier selon l'une des revendications précédentes, où le système de maintien (3) est conçu sous forme de nervures, en échelle et/ou parallélépipédique.

7. Boîtier selon l'une des revendications précédentes, où le système de maintien (3) est conçu de manière élastique.
